# EUROPÄISCHE PATENTSCHRIFT

(11) **EP 0 901 441 B1**
(45) Veröffentlichungstag und Bekanntmachung des Hinweises auf die Patenterteilung: **03.04.2002**
(21) Anmeldenummer: 97925958.7
(22) Anmeldetag: 28.05.1997
(51) Int. Cl.: B60T 13/72, H02G 3/08

(54) **PNEUMATISCHER BREMSKRAFTVERSTÄRKER**
PNEUMATIC SERVO BRAKE
SERVOFREIN PNEUMATIQUE

(30) Priorität: 28.05.1996 DE 19621321
(43) Veröffentlichungstag der Anmeldung: 17.03.1999
(73) Patentinhaber: Continental Teves AG & Co. oHG, 60488 Frankfurt (DE)
(72) Erfinder: SCHONLAU, Jürgen, D-65396 Walluf (DE); BÖHM, Peter, D-61381 Friedrichsdorf (DE); PETERKNECHT, Walter, D-61273 Wehrheim (DE)
(74) Vertreter: Dusil, Vladimir, Dipl.-Ing.
(86) Internationale Anmeldenummer: EP9702756
(87) Internationale Veröffentlichungsnummer: WO9745307

(56) Entgegenhaltungen:
- WO-A-95/32879
- DE-A- 3 729 550
- DE-C- 4 431 882

## Beschreibung

Die Erfindung betrifft einen pneumatischen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das mindestens zwei mit einem elastischen Ventilkörper zusammenwirkende Dichtsitze aufweist, von denen einer einerseits durch eine Betätigungsstange und andererseits unabhängig von der Betätigungsstange durch einen Elektromagneten betätigbar ist, wobei im Verstärkergehäuse eine Kabeldurchführung luftdicht angeordnet ist, durch die sich elektrische Leitungen in das Innere des Verstärkergehäuses hindurch erstrecken.

Ein derartiger Bremskraftverstärker ist z.B. aus der internationalen Patentanmeldung WO 95/32879 bekannt. Bei dem vorbekannten Bremskraftverstärker besteht die Kabeldurchführung aus zwei hermetisch abgedichteten Teilen, wobei der erste, ins Innere des Verstärkergehäuses hineinragende, vorzugsweise rohrförmige Teil als Meßglied eines Wegaufnehmers ausgebildet ist, der der Sensierung der Bewegung der beweglichen Wand des Bremskraftverstärkers dient. Der zweite Teil, der insbesondere dem Positionieren und Abdichten der elektrischen Leitungen dient, ist in eine am Ende des ersten Teiles ausgebildete Aufnahme größeren Durchmessers eingeschoben. Der erste Teil ist mittels einer Dichtungsmuffe in der Wand des Verstärkergehäuses luftdicht aufgenommen, wobei die Dichtungsmuffe in einer Öffnung des Verstärkergehäuses eingeknöpft ist.

Als nachteilig ist bei dem vorbekannten Bremskraftverstärker insbesondere die zweiteilige Ausführung der Kabeldurchführung anzusehen, deren Fertigung mit hohen Kosten verbunden ist. Als weitere Nachteile können der bei der Fertigung notwendige Zeitaufwand und die relativ niedrige Sicherheit des Fertigungsprozesses genannt werden.

Es ist daher Aufgabe der vorliegenden Erfindung, Maßnahmen vorzuschlagen, durch die die mit der Fertigung der Kabeldurchführung verbundenen Kosten erheblich reduziert werden können. Außerdem sollen eine einfache Montage und eine hohe Zuverlässigkeit der Gesamtanordnung im Betrieb gewährleistet sein. Insbesondere soll verhindert werden, daß durch die Litzenzwischenräume der elektrischen Leitungen Luft in die Unterdruckkammer angesaugt wird.

Diese Aufgabe wird erfindungsgemäß dadurch gelöst, daß die Kabeldurchführung als Kunststoff-Spritzteil ausgebildet ist, in dessen Innerem die elektrischen Leitungen teilweise abisoliert sind und im abisolierten Abschnitt verzinnt sind.

Um eine Berührung der abisolierten Abschnitte bei der Herstellung der erfindungsgemäßen Kabeldurchführung wirksam zu verhindern sieht eine weitere vorteilhafte Ausgestaltung des Erfindungsgegenstandes vor, daß die elektrischen Leitungen auf einem im Querschnitt sternförmig ausgebildeten Haltekörper aufgeknöpft sind, wobei die Kabeldurchführung durch Umspritzen des Haltekörpers mit den Leitungen mit Kunststoff hergestellt ist.

Um eine möglichst definierte Führung der elektrischen Leitungen im Inneren des Bremskraftverstärkergehäuse zu erreichen weist die Kabeldurchführung eine am Verstärkergehäuse anliegende radiale Erweiterung auf, auf der eine der Positionierung der elektrischen Leitungen dienende Halteklemme vorgesehen ist.

Die Erfindung wird in der nachfolgenden Beschreibung an einem Ausführungsbeispiel im Zusammenhang mit der beiliegenden Zeichnung näher erläutert. In der Zeichnung zeigt:
- Fig. 1: einen Längsschnitt des erfindungsgemäßen Bremskraftverstärkers in einer Teilansicht, und
- Fig. 2: die bei dem Bremskraftverstärker nach Fig. 1 vorgesehene Kabeldurchführung, teilweise im Axialschnitt.

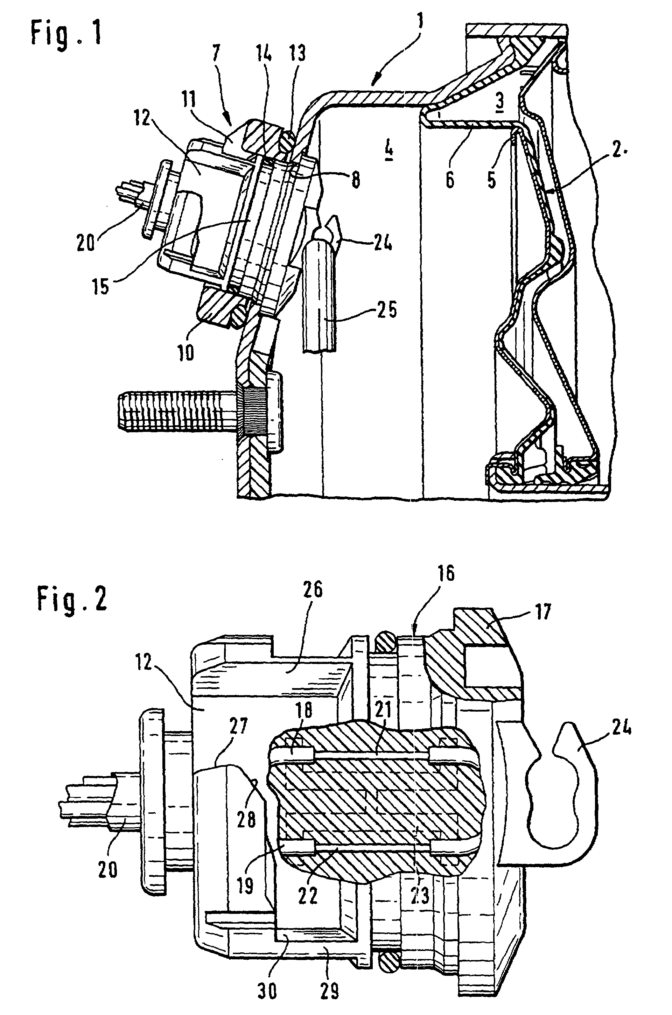

Das in Fig. 1 lediglich schematisch angedeutete Verstärkergehäuse 1 des in der Zeichnung dargestellten erfindungsgemäßen Unterdruckbremskraftverstärkers ist durch eine axial bewegliche Wand 2 in eine Arbeitskammer 3 und eine Unterdruckkammer 4 unterteilt. Die axial bewegliche Wand 2 besteht aus einem kreisrunden, kraftübertragenden, aus Blech tiefgezogenen Membranteller 5 und einer daran anliegenden, aus einem gummiähnlichen Material bestehenden flexiblen Membran 6, die zwischen dem äußeren Umfang des Membrantellers 5 und dem Verstärkergehäuse 1 eine Rollmembran als Abdichtung bildet. In der Mitte des Membrantellers 5 sowie der Membran 6 sind die beiden Teile mit einem nicht gezeigten, ein ebenso nicht gezeigtes Steuerventil aufnehmenden Steuergehäuse verbunden.

Eine mit 7 bezeichnete Kabeldurchführung ist in einer in der in der Zeichnung links dargestellten Verstärkergehäusehälfte ausgebildeten Öffnung 8 verdrehsicher aufgenommen und wird von einem Bajonettring 10, dessen radial nach innen gerichtetete Vorsprünge 11 mit in der Kabeldurchführung 7 ausgebildeten Nuten 12 zusammenwirken bzw. eine Bajonettverbindung bilden, im Verstärkergehäuse 1 gehalten. Eine wirksame Abdichtung der Kabeldurchführung 7 gegenüber dem Verstärkergehäuse 1 stellt ein Dichtring 13 sicher, der bei der Montage der erfindungsgemäßen Kabeldurchführung 7 zwischen der Oberfläche des Verstärkergehäuses 1 und der dem Verstärkergehäuse 1 zu gewandten Stirnfläche des Bajonettringes 10 axial verpreßt wird. Für eine Abdichtung der Kabeldurchführung 7 gegenüber dem Bajonettring 10 sorgt ein zweiter Dichtring 14, der in einer in der Kabeldurchführung 7 ausgebildeten Radialnut 15 angeordnet ist.

Wie insbesondere Fig. 2 zu entnehmen ist, hat die vorhin erwähnte Kabeldurchführung 7 eine im wesertlichen zylindrische Gestalt und weist einen von innen durch das Verstärkergehäuse 1 im Bereich der Öffnung 8 hindurchragenden Abschnitt 16 auf, der in eine radiale Erweiterung 17 größeren Durchmessers übergeht, die im montierten Zustand der Kabeldurchführung innerhalb der Unterdruckkammer 4 am Verstärkergehäuse 1 anliegt. Der Verdrehsicherung der in der Öffnung 8 dient ein von der Erweiterung 17 axial abstehender, nicht gezeigter Vorsprung, der von einer am Rand der Öffnung 8 ausgebildeten Ausnehmung aufgenommen wird. Außerdem ist an der Stirnseite der Erweiterung 17 eine Halteklemme 24 angeformt, die der Positionierung des ins Innere des Verstärkergehäuses 1 sich hinein erstreckenden Kabelabschnitts 25 dient.

Aus dem vorzugsweise als Teilschnitt dargestellten mittleren Bereich der in Fig. 2 dargestellten Kabeldurchführung 7 ist zu erkennen, daß mehrere, zu einem elektrischen Kabelstrang 20 zusammengefaßte Leitungen 18, 19, sich ohne Unterbrechung durch die Kabeldurchführung 7 hindurch erstrecken, wobei sie in ihrem darin befindlichen Abschnitt 21, 22 abisoliert sind. Dabei ist es besonders vorteilhaft, wenn die Leitungen 18, 19 im abisolierten Abschnitt 21, 22 verzinnt sind, so daß kein Ansaugen der Luft über die Litzenzwischenräume möglich ist.

Bei der Herstellung der erfindungsgemäßen Kabeldurchführung 7 werden mehrere, beispielsweise fünf, Leitungen auf einen in der Zeichnung gestrichelt angedeuteten Haltekörper 23 aufgeknöpft, der im Querschnitt vorzugsweise sternförmig ausgebildet ist. Auf die so vorbereitete Anordnung wird anschließend in einem geeigneten Spritzwerkzeug Kunststoff aufgespritzt. Durch das erwähnte Sternprofil wird verhindert, daß die abisolierten Stellen durch den Spritzdruck zusammengedrückt werden.

Bei der Montage der erfindungsgemäßen Kabeldurchführung 7 wird zunächst ihr aus dem Verstärkergehäuse 1 nach außen hinausragender Abschnitt 16 von innen durch die Öffnung 8 hindurchgesteckt und so positioniert, daß der nicht gezeigte, der Verdrehsicherung dienende Vorsprung in die im Verstärkergehäuse 1 ausgebildete Ausnehmung eingreift und die Kabeldurchführung 7 mit ihrer radialen Erweiterung 17 am Verstärkergehäuse 1 zur Anlage kommt. Dann wird um die Kabeldurchführung 7 der vorhin erwähnte Dichtring 13 gelegt, wonach darauf der Bajonettring 10 so aufgesteckt wird, daß die eingangs beschriebenen Vorsprünge 11 in die Nuten 12 in der Kabeldurchführung 7 eingeführt werden. Da jeweils eine (27) der Nutenflanken 26, 27 in eine Schräge 28 übergeht, bewirkt ein Drehen des Bajonettringes 10 im Uhrzeigersinn, während dessen die Vorsprünge 11 entlang der Schrägen 28 bewegt werden, ein Festziehen der Bajonettverbindung unter gleichzeitigem Verpressen des Dichtringes 13, so daß die erfindungsgemäße Kabeldurchführung gegenüber dem Verstärkergehäuse 1 einwandfrei abgedichtet ist. Am Ende der beschriebenen Drehbewegung liegen die Vorsprünge 11 an jeweils einem Anschlag 30 an, der durch jeweils eine die Nuten 12 begrenzende radiale Rippe 29 gebildet ist.

### Bezugszeichenliste:

- 1: Verstärkergehäuse
- 2: bewegliche Wand
- 3: Arbeitskammer
- 4: Unterdruckkammer
- 5: Membranteller
- 6: Rollmembran
- 7: Kabeldurchführung
- 8: Öffnung

- 10: Bajonettring
- 11: Vorsprung
- 12: Nut
- 13: Dichtring
- 14: Dichtring
- 15: Ringnut
- 16: Abschnitt
- 17: Erweiterung
- 18: Leitung
- 19: Leitung
- 20: Kabel
- 21: Abschnitt
- 22: Abschnitt
- 23: Haltekörper
- 24: Halteklemme
- 25: Kabelabschnitt
- 26: Nutflanke
- 27: Nutflanke
- 28: Schräge
- 29: Rippe
- 30: Anschlag

## Patentansprüche

1. Pneumatischer Bremskraftverstärker für Kraftfahrzeuge mit einem Verstärkergehäuse (1), dessen Innenraum durch eine bewegliche Wand (2) in eine erste Kammer (4) (Unterdruckkammer) und eine zweite Kammer (3) (Arbeitskammer) unterteilt ist, sowie mit einem Steuergehäuse, in dem ein eine auf die bewegliche Wand einwirkende pneumatische Druckdifferenz steuerndes Steuerventil angeordnet ist, das mindestens zwei mit einem elastischen Ventilkörper zusammenwirkende Dichtsitze aufweist, von denen einer einerseits durch eine Betätigungsstange und andererseits unabhängig von der Betätigungsstange durch einen Elektromagneten betätigbar ist, wobei im Verstärkergehäuse eine Kabeldurchführung (7) luftdicht angeordnet ist, durch die elektrische Leitungen (20) in das Innere des Verstärkergehäuses sich hindurch erstrecken, **dadurch gekennzeichnet, daß** die Kabeldurchführung (7) als Kunststoff-Spritzteil ausgebildet ist, in dessen Innerem die elektrischen Leitungen (18,19) teilweise abisoliert sind und im abisolierten Abschnitt (21,22) verzinnt sind.

2. Bremskraftverstärker nach Anspruch 1 **dadurch gekennzeichnet, daß** die elektrischen Leitungen (18,19) auf einem im Querschnitt sternförmig ausgebildeten Haltekörper (23) aufgeknöpft sind, wobei die Kabeldurchführung (7) durch Umspritzen des Haltekörpers (23) mit den Leitungen (18,19) mit Kunststoff hergestellt ist.

3. Bremskraftverstärker nach einem der vorhergehenden Ansprüche **dadurch gekennzeichnet, daß** die Kabeldurchführung (7) eine am Verstärkergehäuse (1) anliegende radiale Erweiterung (17) aufweist, auf der eine der Positionierung der elektrischen Leitungen (18,19 bzw. 25) dienende Halteklemme (24) vorgesehen ist.

4. Bremskraftverstärker nach einem der vorhergehenden Ansprüche **dadurch gekennzeichnet, daß** die Kabeldurchführung (7) mit einer Verdrehsicherung versehen ist.

5. Bremskraftverstärker nach Anspruch 4 **dadurch gekennzeichnet, daß** die Kabeldurchführung (7) auf der dem Verstärkergehäuse (1) zugewandten Seite der Erweiterung (17) einen Vorsprung aufweist, der in eine im Verstärkergehäuse (1) ausgebildeten Ausnehmung eingreift.

## Claims

1. Pneumatic brake force booster for automotive vehicles which includes a booster housing (1) whose interior is subdivided by a movable wall (2) into a first chamber (4) (vacuum chamber) and a second chamber (3) (working chamber), and a control housing accommodating a control valve which controls a pneumatic pressure differential that acts upon the movable wall, the said control valve having at least two sealing seats which cooperate with an elastic valve member, one of the sealing seats being operable by an actuating rod, on the one hand, and by an electromagnet independently of the actuating rod, on the other hand, wherein a cable duct (7) is hermetically sealed in the booster housing through which electric lines (20) extend into the interior of the booster housing,
**characterized in that** the cable duct (7) is configured as an injection molded plastic part inside which the electric lines (18, 19) are partly insulated and tin-plated in their insulated portion (21, 22).

2. Brake force booster as claimed in claim 1,
**characterized in that** the electric lines (18, 19) are fitted to a retaining member (23) which has a star-like configuration in cross-section, and the cable duct (7) is provided by plastic lamination of the retaining member (23) with the lines (18, 19).

3. Brake force booster as claimed in any one of the preceding claims,
**characterized in that** the cable duct (7) has a radial extension (17) which bears against the booster housing (1) and on which a retaining clip (24) is provided to position the electric lines (18, 19 or 25, respectively).

4. Brake force booster as claimed in any one of the preceding claims,
**characterized in that** the cable duct (7) has an anti-torsion mechanism.

5. Brake force booster as claimed in claim 4,
**characterized in that** the cable duct (7), on the side of the extension (17) close to the booster housing (1), includes a projection which engages into a recess provided in the booster housing (1).

## Revendications

1. Servofrein pneumatique pour véhicules automobiles comportant un boîtier de servofrein (1) dont le volume intérieur est divisé par une paroi mobile (2) en une première chambre (4) (chambre à dépression) et une deuxième chambre (3) (chambre de travail), ainsi qu'un boîtier de commande dans lequel est disposée une vanne de commande qui commande la différence de pression pneumatique agissant sur la paroi mobile, et qui comporte au moins deux sièges d'étanchéité coopérant avec un corps de soupape élastique, dont un siège peut être actionné d'une part au moyen d'une tige d'actionnement et d'autre part indépendamment de la tige d'actionnement, par un électro-aimant, dans le boîtier de servofrein étant disposé, de manière étanche à l'air, un passe-câble (7) à travers lequel les lignes électriques (20) s'étendent à l'intérieur du boîtier de servofrein, **caractérisé en ce que** le passe-câble (7) est réalisé en tant qu'élément en matière plastique moulé par injection, à l'intérieur duquel les lignes électriques (18, 19) sont partiellement isolées et sont étamées dans la portion isolée (21, 22).

2. Servofrein selon la revendication 1, **caractérisé en ce que** les lignes électriques (18, 19) sont fixées sur un corps de maintien (23) de section en étoile, le passe-câble (7) étant réalisé en matière plastique par enrobage par injection du corps de maintien (23) avec les lignes (18, 19).

3. Servofrein selon l'une des revendications précédentes, **caractérisé en ce que** le passe-câble (7) présente un élargissement radial (17), s'appliquant contre le boîtier de servofrein (1)et sur lequel est prévue une pince de retenue (24) qui sert à positionner les lignes électriques (18, 19 respectivement 25).

4. Servofrein selon l'une des revendications précédentes, **caractérisé en ce que** le passe-câble (7) est pourvu d'un blocage en rotation.

5. Servofrein selon la revendication 4, **caractérisé en ce que** le passe-câble (7) présente, sur le côté de l'élargissement (17) tourné vers le boîtier de servofrein (1), une saillie qui s'engage dans un évidement formé dans le boîtier de servofrein (1).
